# EUROPÄISCHE PATENTSCHRIFT

(11) **EP 1 315 920 B1**
(45) Veröffentlichungstag und Bekanntmachung des Hinweises auf die Patenterteilung: **28.04.2004**
(21) Anmeldenummer: 01969531.1
(22) Anmeldetag: 27.07.2001
(51) Int. Cl.: F16H 25/20, H02K 7/06

(54) **VORSCHUBEINHEIT**
CONVEYING UNIT
UNITE D'AVANCE

(30) Priorität: 09.09.2000 DE 10044733
(43) Veröffentlichungstag der Anmeldung: 04.06.2003
(73) Patentinhaber: INA- Schaeffler KG, 91074 Herzogenaurach (DE)
(72) Erfinder: DÜRSCHMIED, Frank, 90469 Nürnberg (DE)
(86) Internationale Anmeldenummer: PCT/EP2001/008689
(87) Internationale Veröffentlichungsnummer: WO 2002/021019

(56) Entgegenhaltungen:
- EP-A- 1 089 019
- DE-A- 2 809 954
- DE-A- 3 642 938
- US-A- 4 463 291
- PATENT ABSTRACTS OF JAPAN vol. 2000, no. 01, 31. Januar 2000 (2000-01-31) -& JP 11 299169 A (YASKAWA ELECTRIC CORP), 29. Oktober 1999 (1999-10-29)
- PATENT ABSTRACTS OF JAPAN vol. 2000, no. 11, 3. Januar 2001 (2001-01-03) -& JP 2000 220715 A (ORIENTAL MOTOR CO LTD), 8. August 2000 (2000-08-08)

## Beschreibung

Die Erfindung betrifft eine Vorschubeinheit mit einem stangenförmigen Betätigungsorgan nach dem Oberbegriff des Patentanspruchs 1.

Vorschubeinheiten können einer steifen und längenveränderlichen Verbindung zwischen zwei Gelenkpunkten dienen. Sie sind auf unterschiedlichen Gebieten der Technik einsetzbar, beispielsweise auch bei Werkzeugmaschinen, die unter der Bezeichnung "Parallel-Kinematik-Maschinen" (PKM) bekannt sind. Durch den integrierten Antrieb und ein Messsystem kann die Länge einer Vorschubeinheit gezielt verändert werden. Die Wirkung der Vorschubeinheit ist derjenigen einer ausfahrbaren Strebe vergleichbar. Eine Parallel-Kinematik-Maschine lässt sich mit drei bzw. sechs solchen Einheiten aufbauen.

Aus der Druckschrift DE 36 42 938 C2 ist eine Vorschubeinheit bekannt, welche als Kraftbetätigungsvorrichtung mit einem Hebemechanismus für einen Führerhaus-Kippapparat eines Lastkraftwagens vorgesehen ist. Dem Hebemechanismus ist ein Drehantriebs-Getriebemechanismus mit einem Motor zugeordnet, wobei der Motor sich außerhalb des Gehäuses für das Betätigungsorgan befindet. Daher weist diese Vorrichtung eine komplizierte Konstruktion auf, ist nicht spielfrei und axial wenig steif, und benötigt einen großen Bauraum, welcher sie für die Verwendung an einer Werkzeugmaschine ungeeignet macht.

Die gattungsgemäße Druckschrift JP 11-299 169 A zeigt eine Vorschubeinheit der eingangs genannten Art. Konkrete Angaben über die Möglichkeit der angelenkten Halterung dieser Einheit an einem Anschlußbauteil sind der Druckschrift nicht zu entnehmen.

### Zusammenfassung der Erfindung

Der Erfindung liegt die Aufgabe zu Grunde, eine einfach aufgebaute Vorschubeinheit zu schaffen, welche ein kompaktes, einbaufertiges Bauteil bildet und bei welcher in angelenkter Anordnung an einem Maschinenrahmen das rotationsbedingte Auftreten einer Unwucht vermieden wird.

Diese Aufgabe wird erfindungsgemäß dadurch gelöst, dass das Festlager als Axialschrägkugellager ausgebildet und im Bereich einer durch den Schwerpunkt der Vorschubeinheit verlaufenden Gelenkachse für das Gehäuse axial abgestützt ist. Das Gehäuse kann einen Flanschkörper und die Hohlwelle einen angeformten Flansch für die axiale Abstützung des Festlagers aufweisen. Das Loslager kann als Nadellager ausgebildet sein.

Bei der erfindungsgemäßen Vorschubeinheit kann auf einen konstruktiv aufwendigen Drehantriebs-Getriebemechanismus verzichtet werden. Ein zu dem Gehäuseraum zusätzlicher Bauraum für den Antriebsmotor wird nicht benötigt. Die Gewindespindel ist gegenüber dem Gehäuse herausfahrbar verschiebbar und wirkt damit unmittelbar als Betätigungsorgan. Die Lagerung des Antriebsmotors und der Gewindespindel bilden eine Einheit und ermöglichen einen optimalen Kraftfluss. Dabei ist die Lagerung thermisch neutral aufgebaut, so dass der Abstand von einem Gelenkpunkt zu dem anderen Gelenkpunkt der Vorschubeinheit von der Motorwärme nicht beeinflusst wird. Die Konstruktion der

Einheit ist so gewählt, daß ihr Schwerpunkt auf einer Gelenkachse der Einheit liegt, um Momente um die Gelenkachse zu minimieren.

### Kurze Beschreibung der Zeichnung

Ein Ausführungsbeispiel der Erfindung ist in der Zeichnung dargestellt und wird im Folgenden näher erläutert. Es zeigen
- Figur 1: eine erfindungsgemäße Vorschubeinheit im Längsschnitt;
- Figur 2: eine schematische Darstellung einer Werkzeugmaschine, an welcher erfindungsgemäße Vorschubeinheiten eingebaut werden können.

### Ausführliche Beschreibung der Zeichnung

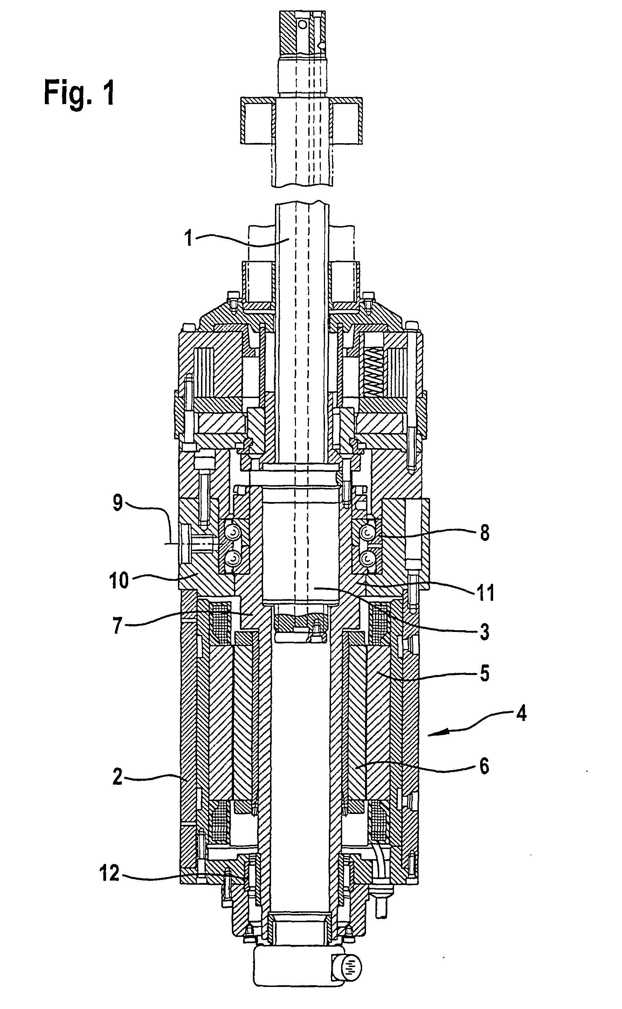

Eine in Figur 1 dargestellte erfindungsgemäße Vorschubeinheit, die auch als Modul bezeichnet wird, weist eine Gewindespindel 1 auf, die sich teilweise in einem Gehäuse 2 befindet und dort aus diesem längsverschieblich herausfahrbar geführt ist. In dem Gehäuse 2 ist die Gewindespindel 1 von einer Spindelmutter 3 umgeben, welche von einem Antriebsmotor 4 angetrieben wird. Dieser weist einen an einer Gehäusewand befestigten Ständer 5 und einen innerhalb des Ständers angeordneten Läufer 6 auf, der eine Hohlwelle 7 konzentrisch umgibt und an dieser befestigt ist.

Mit der Hohlwelle 7 und dem Läufer 6 ist die Spindelmutter 3 in einem Festlager 8 drehbar gelagert, welches als Axialschrägkugellager ausgebildet ist. Dieses Lager liegt zentral zu der Spindelmutter 3 und symmetrisch zu einer Gelenkachse 9 der Vorschubeinheit, welche rechtwinklig zu der Längsachse der Gewindespindel 1 verläuft. Es ist in einem Flanschkörper 10 des Gehäuses 2 befestigt. Der Innenring des Festlagers 8 liegt außerdem axial an einem Flansch 11 der Hohlspindel 7 an. Der Flanschkörper 10 besitzt Bohrungen zur Aufnahme von Achszapfen eines Schultergelenkes.

Axialkräfte, welche über die Gewindespindel 1 in das Gehäuse 2 eingeleitet werden, werden von der Spindelmutter 3 in die Hohlwelle 7 sowie weiter in das Festlager 8 und in die Gelenkachse 9 geleitet. Somit ist ein optimaler Kraftfluss bei maximaler Steifigkeit gewährleistet. Die Spindelmutter 3 und das Festlager 8 sind vorgespannte Einheiten. Für den Antriebsmotor 4 und die aus diesem herausragende Hohlwelle 7 ist in dem Gehäuse 2 außerdem ein Loslager 12 angeordnet, welches als Nadellager ausgebildet und an einem Ende des Gehäuses 2 in diesem angeordnet ist. Dementsprechend wird die Positioniergenauigkeit des Moduls durch eine Wärmeausdehnung der Hohlwelle in Folge der vom Motor eingebrachten Wärme nicht beeinflusst.

Das Festlager 8 und die Gelenkachse 9 sind bei dieser Anordnung im Schwerpunkt der auch als Modul bezeichneten Vorschubeinheit positioniert, um bei der Rotation um die Gelenkachse 9 eine Unwucht zu vermeiden. Durch die Lageranordnung direkt an der Spindelmutter 3 im Bereich der Gelenkachse 9 und durch die hiermit erreichte hohe Steifigkeit sind auch die Ausgangsbedingungen für eine hohe Eigenfrequenz des Systems sowie ein niedriges Laufgeräusch gegeben.

Durch die Mehrfachlagerung, also die Verwendung des Festlagers 8 auch für die Motorlagerung, wird bei kleinem Bauraum eine hohe Leistungsdichte erzielt. Das Festlager 8 und das Loslager 12 dienen gleichzeitig zur Lagerung des Läufers 6 des Antriebsmotors 4 und der Spindelmutter 3, welche die Gewindespindel 1 führt. Das Modul ist als Kompletteinheit mit Motor, Bremse, Messsystem und Lagerung einbaufertig für Parallel-Kinematik-Maschinen.

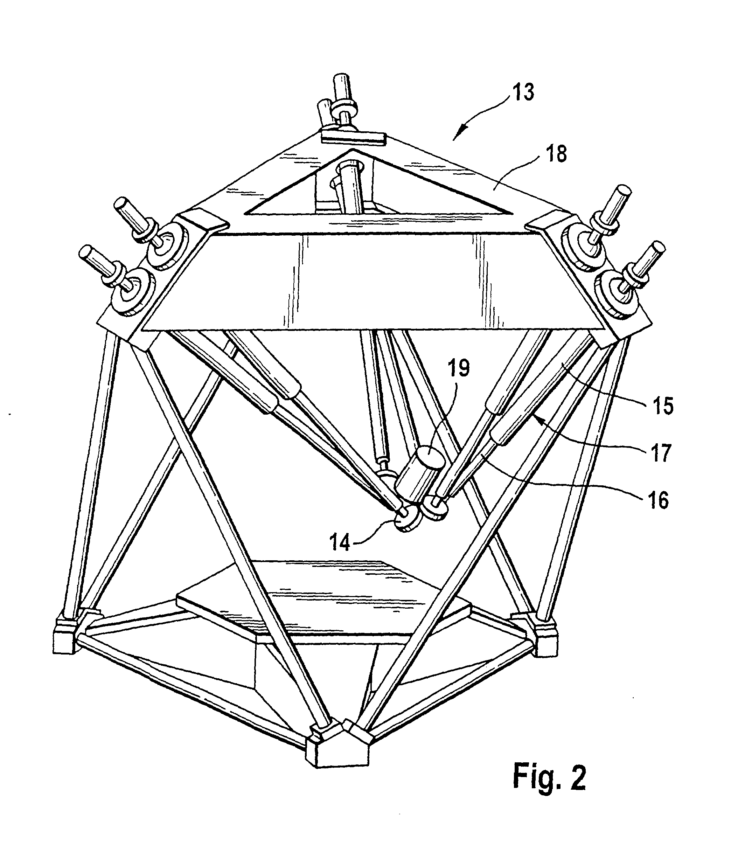

Bei einer in Figur 2 dargestellten Werkzeugmaschine 13, die als Parallel-Kinematik-Maschine ausgebildet ist, kann eine Werkzeugaufnahme 14 in jede gewünschte Position im Raum bewegt werden. Die Maschine ist mit mehreren Vorschubeinheiten versehen, die jeweils aus ineinander eingesteckten Rohren 15 und 16 gebildeten ausfahrbaren Armen 17 bestehen, welche mit einem Ende an einem Rahmen 18 und mit dem anderen Ende an der Werkzeugaufnahme 14 angelenkt sind. Die Werkzeugaufnahme 14 ist mit einem nicht näher dargestellten Werkzeug versehen, das von einem Motor 19 angetrieben wird. Durch Ein- bzw. Ausfahren eines oder mehrerer Arme 17 lässt sich die Werkzeugaufnahme 14 in jede gewünschte Position im Raum bewegen. Bei dieser Maschine können erfindungsgemäße Vorschubeinheiten als ausfahrbare Arme verwendet werden.

### Bezugszahlen

- 1: Gewindespindel
- 2: Gehäuse
- 3: Spindelmutter
- 4: Antriebsmotor
- 5: Ständer
- 6: Läufer
- 7: Hohlwelle
- 8: Festlager
- 9: Gelenkachse
- 10: Flanschkörper
- 11: Flansch
- 12: Loslager
- 13: Werkzeugmaschine
- 14: Werkzeugaufnahme
- 15: Rohr
- 16: Rohr
- 17: ausfahrbarer Arm
- 18: Rahmen
- 19: Motor

## Patentansprüche

1. Vorschubeinheit mit einem stangenförmigen Betätigungsorgan, welches in einem Gehäuse (2) angeordnet und gegenüber diesem axial verschiebbar geführt ist, und mit einem Antriebsmotor (4), welcher die Verschiebung des Betätigungsorgans über eine in dem Gehäuse (2) in Lagern drehbar gehaltene Antriebsvorrichtung bewirkt, die eine Gewindespindel (1) und eine diese umgebende Spindelmutter (3) enthält, wobei der Antriebsmotor (4) mit seinem Ständer (5) und seinem Läufer (6) in dem Gehäuse (2) angeordnet und die Spindelmutter (3) in einer von dem Läufer (6) umgebenen und an diesem befestigten Hohlwelle (7) koaxial angeordnet und befestigt ist und die Hohlwelle (7) in dem Bereich der Spindelmutter (3) in einem Festlager (8) und in einem Endbereich des Gehäuses (2) in einem Loslager (12) drehbar angeordnet ist, wobei das Festlager (8) als Axialschrägkugellager ausgebildet ist **dadurch gekennzeichnet, dass** das Festlager, im Bereich einer durch den Schwerpunkt der Vorschubeinheit verlaufenden Gelenkachse (9) für das Gehäuse (2) axial abgestützt ist.

2. Vorschubeinheit nach Anspruch 1, **dadurch gekennzeichnet, dass** das Gehäuse (2) einen Flanschkörper (10) und die Hohlwelle (7) einen angeformten Flansch (11) für die axiale Abstützung des Festlagers (8) aufweist.

3. Vorschubeinheit nach Anspruch 1, **dadurch gekennzeichnet, dass** das Loslager (12) als Nadellager ausgebildet ist.

## Claims

1. Feed unit having a rod-shaped actuating element which is arranged in a housing (2) and is guided in an axially displaceable manner relative to the latter, and having a drive motor (4) which effects the displacement of the actuating element via a drive device which is rotatably held in the housing (2) in bearings and contains a screw spindle (1) and a spindle nut (3) surrounding the latter, the drive motor (4) being arranged with its stator (5) and its rotor (6) in the housing (2), and the spindle nut (3) being coaxially arranged and fastened in a hollow shaft (7) surrounded by the rotor (6) and fastened to the latter, and the hollow shaft (7) being rotatably arranged in a fixed bearing (8) in the region of the spindle nut (3) and in a floating bearing (12) in an end region of the housing (2), the fixed bearing (8) being designed as an angular-contact thrust ball bearing, **characterized in that** the fixed bearing is axially supported in the region of an articulation axis (9), running through the centre of gravity of the feed unit, for the housing (2).

2. Feed unit according to Claim 1, **characterized in that** the housing (2) has a flange body (10); and the hollow shaft (7) has an integrally formed flange (11) for the axial support of the fixed bearing (8).

3. Feed unit according to Claim 1, **characterized in that** the floating bearing (12) is designed as a needle bearing.

## Revendications

1. Unité d'avance comprenant un organe d'actionnement en forme de barre qui est disposé dans un carter (2) et qui est guidé de manière à pouvoir coulisser axialement par rapport à celui-ci, et comprenant un moteur d'entraînement (4) qui provoque le coulissement de l'organe d'actionnement par le biais d'un dispositif d'entraînement maintenu à rotation dans des paliers dans le carter (2), qui contient une broche filetée (1) et un écrou de broche (3) l'entourant, le moteur d'entraînement (4) étant disposé avec son stator (5) et son rotor (6) dans le carter (2) et l'écrou de broche (3) étant fixé et disposé coaxialement dans un arbre creux (7) entouré par le rotor (6) et fixé sur celui-ci, et l'arbre creux (7) étant disposé de manière à pouvoir tourner dans la région de l'écrou de broche (3) dans un palier fixe (8) et dans une région d'extrémité du carter (2) dans un palier libre (12), le palier fixe (8) étant réalisé en tant que roulement à billes oblique axial, **caractérisée en ce que** le palier fixe est supporté axialement dans la région d'un axe d'articulation (9) pour le carter (2) s'étendant à travers le centre de gravité de l'unité d'avance.

2. Unité d'avance selon la revendication 1, **caractérisée en ce que** le carter (2) présente un corps de bride (10) et l'arbre creux (7) présente une bride façonnée (11) pour le support axial du palier fixe (8).

3. Unité d'avance selon la revendication 1, **caractérisée en ce que** le palier libre (12) est réalisé sous forme de palier à aiguilles.
